(19) Europäisches Patentamt / European Patent Office / Office européen des brevets

(11) **EP 4 681 842 A1**

(12) **EUROPEAN PATENT APPLICATION**
published in accordance with Art. 153(4) EPC

(43) Date of publication:
**21.01.2026 Bulletin 2026/04**

(21) Application number: **24770363.0**

(22) Date of filing: **15.02.2024**

(51) International Patent Classification (IPC):
**B22F 1/00** (2022.01)   **B22F 1/05** (2022.01)
**B22F 1/065** (2022.01)   **B22F 10/28** (2021.01)
**C22C 27/04** (2006.01)

(52) Cooperative Patent Classification (CPC):
**B22F 1/00; B22F 1/05; B22F 1/065; B22F 10/28; C22C 27/04**

(86) International application number:
**PCT/JP2024/005133**

(87) International publication number:
**WO 2024/190248 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023 JP 2023038449**

(71) Applicant: **Proterial, Ltd.**
**Tokyo 135-0061 (JP)**

(72) Inventors:
- **WATANABE Junya**
  **Tokyo 135-0061 (JP)**
- **SAITO Kazuya**
  **Tokyo 135-0061 (JP)**
- **NIU Jing**
  **Tokyo 135-0061 (JP)**

(74) Representative: **Becker, Eberhard**
**Becker Kurig & Partner**
**Patentanwälte mbB**
**Bavariastraße 7**
**80336 München (DE)**

(54) **W POWDER AND ADDITIVE MANUFACTURING PRODUCT**

(57)     Provided are: W powder capable of giving an additive manufacturing product with fewer internal defects; and an additive manufacturing product obtained by using same. This W powder comprises W and inevitable impurities, wherein: the impurities contain 1% by mass or less of Mo, and 0.1-300.0 ppm by mass of Na; and the W powder has a median diameter (D50) of 10-200 $\mu$m and a degree of circularity of 0.800 or more. The fluidity of the W powder measured in accordance with JIS Z 2502 is preferably 15.00 s or less per 50 g. The area ratio of defects in an additive manufacturing product obtained by using the W powder is 2% or less on a cross-section parallel to the building direction.

100.000μm

FIG. 1

**EP 4 681 842 A1**

**Description**

Technical Field

The present invention relates to, for example, W powder used in additive manufacturing methods and additive manufactured objects using the same.

Related Art

W (tungsten), which is a refractory metal, is used in heat dissipation substrate components for electronic devices and heaters for high-temperature furnaces due to its low thermal expansion coefficient and high thermal conductivity. In addition, W is also used in collimators for X-ray CT (Computed Tomography) devices due to its excellent radiation shielding properties.

On the other hand, W has poor ductility at room temperature, resulting in poor machinability. Therefore, for example, it is effective to apply additive manufacturing methods (hereinafter referred to as AM methods) using powder as a raw material for complex shape components such as the above-mentioned collimators.

The AM method is a technology for manufacturing three-dimensional shape components by repeating the process of locally melting and solidifying powder made of metal or other materials. This AM method includes several techniques, for example, the powder bed method that manufactures three-dimensional shape components by repeating the process of irradiating powder paved on a stage with a heat source such as a laser to melt and solidify it. This technique is capable of manufacturing desired components by near-net molding, thereby greatly reducing processes such as machining.

Thus, the AM method is effective for application to W, which has poor machinability, and for example, Patent Document 1 proposes an additive manufactured object produced by the AM method. Additionally, Patent Document 2 proposes W powder suitable as a raw material for the AM method.

Citation List

Patent Literature

Patent Document 1: Japanese Patent Application Laid-Open Publication No. 2022-507758
Patent Document 2: Japanese Patent Application Laid-Open Publication No. 2022-46953

SUMMARY OF INVENTION

Technical Problem

By applying the AM method to W, which has poor machinability, components having complex shapes can be easily produced. However, additive manufactured objects actually produced by the AM method may have internal defects formed due to intergranular cracking and the like, which can be a factor in preventing the obtained components from achieving high strength.

An object of the present invention is to provide W powder capable of manufacturing an additive manufactured object with few internal defects and an additive manufactured object using the same.

Solution to Problem

A W powder of the present invention consists of W and inevitable impurities, in which the impurities contains Mo of 1 mass% or less and Na of 0.1 to 300.0 mass ppm. The W powder has a median diameter (D50) of 10 to 200 $\mu$m, and has a circularity of 0.800 or more.

Additionally, the W powder of the present invention preferably has a flowability of 15.00 s/50g or less as measured in accordance with JIS Z 2502.

The additive manufactured object of the present invention consists of W and inevitable impurities, and has a defect area ratio of 2% or less in a cross-section parallel to a build direction.

Effects of Invention

The present invention is capable of providing W powder capable of manufacturing an additive manufactured object with few internal defects and an additive manufactured object using the same, and is a useful technology for manufacturing components with complex shapes.

BRIEF DESCRIPTION OF DRAWINGS

[FIG. 1] An optical microscope photograph illustrating an example of a cross-section parallel to the build direction of an additive manufactured object manufactured from W powder as Present Invention Example 1 of the present invention.
[FIG. 2] An optical microscope photograph illustrating an example of a cross-section parallel to the build direction of an additive manufactured object manufactured from W powder as Comparative Example 2.

DESCRIPTION OF THE EMBODIMENTS

The W powder of the present invention has a Mo content as an impurity of 1 mass% or less. Mo is an element that begins to react with oxygen in the atmosphere at room temperature, and oxidation proceeds rapidly at 500°C or higher. Therefore, in the case of producing an additive manufactured object by the AM method, in response to the W powder as a raw material being heated and melted by a heat source such as a laser, Mo contained in the powder reacts with oxygen in the atmosphere to form Mo oxide. Among these Mo oxides, chemically stable $MoO_3$ has a boiling point of 1155°C, and therefore may exist in a gaseous state in molten W exceeding 3000°C formed by a laser or the like. In the case of the molten W solidifying before this gaseous $MoO_3$ desorbs, pores that become internal defects remain in the additive manufactured object, which may prevent high strengthening of the finally obtained component. For this reason, in the present invention, the Mo content is set to 1 mass% or less. Thereby, the W powder of the present invention is capable of reducing the occurrence of internal defects that may reduce the strength of the additive manufactured object. The W powder according to the embodiment of the present invention preferably has a Mo content measured by atomic absorption spectroscopy of 0.01 mass% or less (100 mass ppm or less) for the same reason as above, and more preferably has a Mo content measured by glow discharge mass spectrometry of 0.001 mass% or less (10 mass ppm or less), and further 0.00044 mass% or less (4.4 mass ppm or less).
The W powder according to the embodiment of the present invention preferably has a lower limit of Mo content of 0.1 mass ppm, and more preferably 0.5 mass ppm, in consideration of industrial mass productivity.
The W powder of the present invention has a Na content as an impurity of 0.1 to 300.0 mass ppm. W, which is an element constituting the W powder of the present invention, is first extracted as $Na_2WO_4$ from raw material ore (for example, ferberite) by alkali components such as NaOH and $Na_2CO_3$. The extracted $Na_2WO_4$ undergoes hydrochloric acid treatment and immersion in ammonia solution to become ammonium paratungstate, and then becomes $WO_3$ by being heated in an oxidizing atmosphere.
W may be obtained by hydrogen reduction of $WO_3$. Here, in consideration of industrial mass productivity, various alkali metal compounds (for example, NaOH and $Na_2CO_3$) may be added to accelerate the reduction rate. Some alkali metal compounds exhibit deliquescence and have the function of absorbing moisture contained in air. Therefore, in the case where alkali metal compounds such as NaOH added during the W refining process are not sufficiently removed and remain, the finally obtained W powder becomes in a state where it easily adsorbs moisture.
In the case where moisture is adsorbed on the surface of W powder, agglomeration tends to occur due to liquid bridge adhesive force that attracts powder particles to each other. Powder agglomeration becomes a factor that reduces the flowability of powder. In AM method, in the case where the flowability of W powder as raw material is poor, powder is not stably supplied to build location, which becomes a factor causing defects to occur inside additive manufactured object. For this reason, the W powder of the present invention has a Na content of 300.0 mass ppm or less in order to suppress agglomeration due to liquid bridge adhesive force, that is, to eliminate adsorption of moisture on powder surface. Thereby, the W powder of the present invention can improve flowability and suppress occurrence of defects inside additive manufactured object. The W powder according to the embodiment of the present invention preferably has a Na content of 100.0 mass ppm or less, more preferably 50.0 mass ppm or less, and even more preferably 5.0 mass ppm or less for the same reason as described above.
The W powder of the present invention has a lower limit of Na content of 0.1 mass ppm in consideration of the above-mentioned industrial mass productivity. The W powder according to the embodiment of the present invention preferably has a Na content of 0.5 mass ppm or more for the same reason as described above.
The W powder of the present invention has a median diameter (D50: 50% particle size of volume-based cumulative particle size distribution) of 10 to 200 $\mu$m. By setting D50 to 10 $\mu$m or more, the W powder of the present invention is capable of reducing the specific surface area of W powder, reduce adsorption of moisture on powder surface due to humidity in atmosphere, ensure good flowability, and suppress occurrence of defects inside additive manufactured object. The W powder according to the embodiment of the present invention preferably has D50 of 30 $\mu$m or more, and more preferably 50 $\mu$m or more for the same reason as described above.

Moreover, by setting D50 to 200 $\mu$m or less, the W powder of the present invention can improve powder paving in the case of producing additive manufactured object by, for example, powder bed method, while ensuring good melting property with respect to heat source such as laser, thereby making it possible to maintain dimensional accuracy of finally obtained parts. The W powder according to the embodiment of the present invention preferably has D50 of 180 $\mu$m or less, and more preferably 150 $\mu$m or less for the same reason as described above.

The volume-based cumulative particle size distribution of the W powder of the present invention is expressed by measured values according to laser diffraction scattering method in compliance with JIS Z 8825.

The W powder of the present invention has a circularity of 0.800 or more. In the case of powder having circularity below 0.800, surface irregularities of powder increase and kinetic friction force between powders increases, thereby reducing flowability. In the case of reduced flowability, powder is not stably supplied to build location, which becomes a factor causing defects inside additive manufactured object. Therefore, the W powder of the present invention has circularity of 0.800 or more. Thereby, the W powder of the present invention can improve flowability and suppress occurrence of defects inside additive manufactured object. The W powder according to the embodiment of the present invention preferably has circularity of 0.870 or more, and more preferably 0.900 or more for the same reason as described above.

The circularity of powder is preferably as high as possible from the viewpoint of improving powder supply to build location, but considering manufacturability such as increased man-hours and reduced yield due to classification treatment, it is preferably 0.990 or less, and more preferably 0.980 or less.

The circularity referred to in the present invention is calculated by the following formula, and in the case of perfectly spherical powder, the circularity becomes 1.000.

$$[\text{Circularity}] = 4\pi[\text{Projected area of particle}]/[\text{Perimeter of particle}]^2$$

Here, for measurement of projected area and perimeter of particle, an image analysis device may be used, for example.

The W powder of the present invention preferably has flowability of 15.00s/50g or less measured in compliance with JIS Z 2502. The flowability referred to here is expressed by the time for 50g of powder to pass through a funnel equipped with an orifice having diameter of 2.5mm, and in the case of powder not passing through the funnel in flowability measurement, it is considered as having no flowability. The W powder according to the embodiment of the present invention is premised on flowing due to its application, and from the viewpoint of supplying necessary amount of powder to build location, flowability is more preferably 12.00s/50g or less.

The W powder according to the embodiment of the present invention preferably has flow aid added and mixed as necessary in order to secure the above-mentioned flowability. The flow aid is preferably alumina or silica powder having D50 of 1$\mu$m or less, and is preferably added and mixed in a range of 50 mass ppm or less.

The W powder of the present invention is preferably obtained by applying spheroidization treatment using thermal plasma to W raw material powder obtained by cutting and pulverizing an ingot material whose Mo and Na content has been adjusted in advance. This makes it possible to obtain W powder with low Mo and Na content and high circularity. Here, spheroidization treatment means spheroidizing the shape of powder by passing W raw material powder through thermal plasma flame. The W raw material powder that has passed through thermal plasma flame is instantaneously heated and melted to become droplets, and then solidifies in a spheroidized state due to the action of surface tension. The solidified W powder has a shape close to a perfect sphere.

Here, it is preferable to use a mixed gas of hydrogen gas and inert gas as working gas for thermal plasma flame. By using hydrogen gas as working gas, thermal plasma flame with higher energy density may be generated, and melting and spheroidization of W raw material powder are promoted. Additionally, thermal plasma flame has temperature distribution and reaches nearly 10000°C in high temperature regions. W raw material powder that has passed through such high temperature regions not only melts but may partially evaporate. At this time, Mo and Na, which are inevitable impurities, evaporate, making it possible to obtain W powder with low Mo and Na content.

On the other hand, part of the evaporated W raw material powder is cooled to solidify as ultrafine particles with particle diameter of 0.3$\mu$m or less, and may adhere to the surface of spheroidized W powder. W powder with a large amount of adhered ultrafine particles has fine irregularities formed on the surface, becomes prone to agglomeration, and reduces flowability. Therefore, to obtain the W powder of the present invention, it is preferable to remove ultrafine particles adhering to the surface of W powder that has undergone spheroidization treatment.

To reduce ultrafine particles adhering to the surface, it is preferable to perform classification treatment using, for example, an air classifier. This air classification is preferably performed using, for example, a precision air classifier with rotor rotation speed of 4000rpm or more.

Additionally, to reduce ultrafine particles adhering to the surface, W powder that has undergone spheroidization treatment may be immersed in pure water, alcohol, or the like and cleaned by applying oscillation or ultrasonic vibration, and then dried.

Next, the additive manufactured object of the present invention is described. The additive manufactured object of the present invention has a defect area ratio of 2% or less in a cross-section parallel to the build direction. Defects in the additive manufactured object are locations where stress concentration is likely to occur in the case of stress being applied to the additive manufactured object, and may act as starting points of fracture, potentially causing significant reduction in strength of the additive manufactured object. Since defects in the additive manufactured object occur in each layer during the build process, to evaluate defects occurring inside the additive manufactured object, it is appropriate to observe "cross-sections parallel to the build direction" which are cross-sections including each layer.

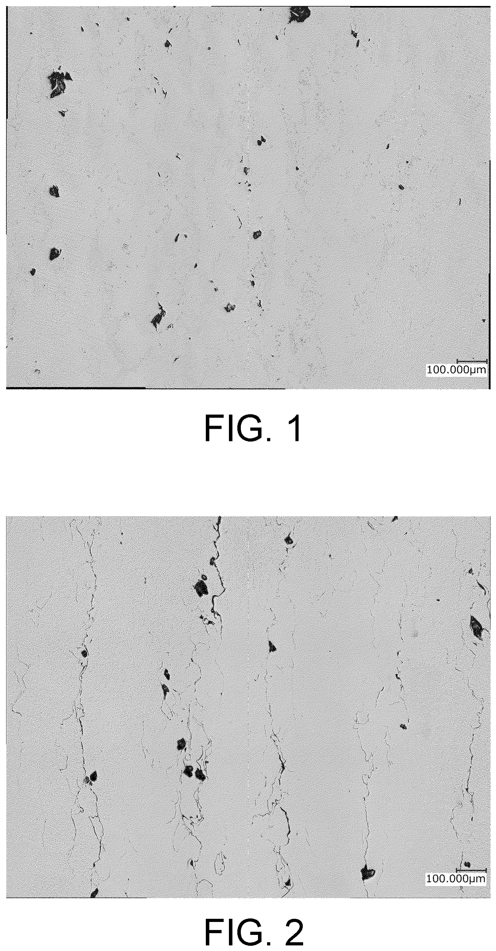

FIG. 1 is an optical microscope photograph illustrating an example of a cross-section parallel to the build direction of an additive manufactured object. In FIG. 1, parts shown as black parts in the matrix shown as gray parts are defective parts. The additive manufactured object of the present invention has a defect area ratio of 2% or less in a cross-section parallel to the build direction, such that in the case of stress being applied to the additive manufactured object, stress is less likely to concentrate and reduction in strength can be suppressed. Additionally, in the additive manufactured object according to the embodiment of the present invention, for the same reason as above, the defect area ratio is preferably 1.8% or less, and more preferably 1.5% or less.

For analysis of the above defects, for example, an optical microscope may be used. First, a cross-section parallel to the build direction of this additive manufactured object is collected from the position of the center part of the additive manufactured object. At this time, that the cross-section is "parallel to the build direction" may be confirmed from build traces during additive manufacturing or the form of the additive manufactured object.

Next, images captured of this cross-section with an optical microscope (magnification 500×) are connected to create a cross-sectional image of 1.25mm or more in length × 1.6mm or more in width. A measurement field of view is obtained by capturing 5 fields of view with a region of 1.25mm or more in length × 1.6mm or more in width as 1 field of view. Then, for each captured field of view, binarization processing is performed such that the boundary between defects and the matrix becomes clear, the area ratio of defects in each field of view is determined, and by taking the average of the area ratios of the 5 fields of view, the "defect area ratio" according to the present invention may be obtained.

The additive manufactured object of the present invention may be produced by including a process of paving W powder in layers and a process of forming solidified layers by sequentially melting and solidifying the paved W powder with a scanning heat source having a diameter larger than the D50 of this W powder, and by repeating these processes to form multiple layered solidified layers. For the scanning heat source, for example, laser or electron beam may be used. The diameter of this scanning heat source is preferably larger than the D50 of the W powder because it may uniformly melt the aggregate of W powder.

The additive manufactured object of the present invention may be produced by setting the above-described laser output to 50-450W, scanning speed to 100-2000mm/s, scanning pitch to 0.02-0.20mm, and build thickness per scan to 10-200μm.

In the case of the above-described laser output being too low, W powder cannot be sufficiently melted, so inside the additive manufactured object, defects derived from gaps generated between powders are likely to be formed in response to paving W powder in layers. Therefore, the laser output is preferably 50W or more, more preferably 200W or more, and even more preferably 250W or more.

On the other hand, in the case of the laser output being too high, excessive heat is given to the W powder, the flow of molten W becomes active, and defects are likely to occur inside the additive manufactured object by involving gas. Therefore, the laser output is preferably 450W or less, and more preferably 400W or less.

Also, in the case of the above-described scanning speed being too low, excessive heat is given to the W powder, the flow of molten W becomes active, and defects are likely to occur inside the additive manufactured object by involving gas. Therefore, the scanning speed is preferably 100mm/s or more, and more preferably 150mm/s or more.

On the other hand, in the case of the scanning speed being too high, W powder cannot be sufficiently melted, so inside the additive manufactured object, defects derived from gaps generated between powders are likely to be formed in response to paving W powder in layers. Therefore, the scanning speed is preferably 2000mm/s or less, more preferably 1000mm/s or less, even more preferably 800mm/s or less, and most preferably 500mm/s.

Also, in the case of the scanning pitch being too small, excessive heat is given to the W powder, the flow of molten W becomes active, and defects are likely to occur inside the additive manufactured object by involving gas. Therefore, the scanning pitch is preferably 0.20mm or less, more preferably 0.15mm or less, and even more preferably 0.10mm or less.

On the other hand, in the case of the scanning pitch becoming too large, it becomes difficult to melt the entire surface of the paved W powder during laser irradiation, which becomes a factor for forming defects inside the additive manufactured object. Therefore, the scanning pitch is preferably 0.02mm or more, more preferably 0.04mm or more, even more preferably 0.06mm or more, and most preferably 0.08mm or more.

Also, in the case of the build thickness per scan being too small, the number of layers until reaching a predetermined size of the additive manufactured object increases, so the time required for the process becomes long. Therefore, the build thickness per scan is preferably 10μm or more, and more preferably 15μm or more.

On the other hand, in the case of the build thickness per scan being too large, heat becomes difficult to transfer to the entire paved W powder during laser irradiation, making it difficult for the W powder to melt sufficiently. Therefore, the build thickness per scan is preferably 200μm or less, more preferably 180μm or less, and even more preferably 150μm or less.

Examples

W raw material powder having D50 of 12μm, Mo content of less than 0.01 mass%, and Na content of 1.0 mass ppm was prepared. This W raw material powder was subjected to spheroidization treatment using a radio frequency induction thermal plasma device. The operating conditions were plasma power of 120kW, argon (flow rate = 260L/min) and hydrogen (flow rate = 30L/min) adjusted as working gas, and argon (flow rate = 8L/min) used as supply gas.

Next, classification treatment was performed on the W powder that had undergone spheroidization treatment using a precision air classifier (TC-25) manufactured by Nisshin Engineering Co., Ltd., with the rotor rotation speed set to 4000rpm. To the W powder that had undergone classification treatment, silica powder having D50 of 1μm or less was added as a flow aid at 7 mass ppm and mixed to obtain W powder as Present Invention Example 1.

W raw material powder having D50 of 56μm, Mo content of less than 0.01 mass%, and Na content of 1.0 mass ppm was prepared. This W raw material powder was subjected to spheroidization treatment using a radio frequency induction thermal plasma device. The operating conditions were plasma power of 160kW, argon (flow rate = 280L/min) and hydrogen (flow rate = 45L/min) adjusted as working gas, and argon (flow rate = 8L/min) used as supply gas.

Next, sieve classification using a mesh was performed on the W powder that had undergone spheroidization treatment to obtain W powder as Present Invention Example 2.

W raw material powder having D50 of 14μm, Mo content of less than 0.01 mass%, and Na content of 3.0 mass ppm was prepared. To this W raw material powder, silica powder having D50 of 1μm or less was added as a flow aid at 30 mass ppm and mixed to obtain W powder as Present Invention Example 3.

W raw material powder having D50 of 14μm, Mo content of less than 0.01 mass%, and Na content of 3.0 mass ppm was prepared. This W raw material powder was subjected to spheroidization treatment using a radio frequency induction thermal plasma device. The operating conditions were plasma power of 180kW, argon (flow rate = 280L/min) and hydrogen (flow rate = 60L/min) adjusted as working gas, and argon (flow rate = 8L/min) used as supply gas.

Next, classification treatment was performed on the W powder that had undergone spheroidization treatment using a precision air classifier (TC-25) manufactured by Nisshin Engineering Co., Ltd., with the rotor rotation speed set to 4000rpm. To the W powder that had undergone classification treatment, silica powder having D50 of 1μm or less was added as a flow aid at 15 mass ppm and mixed to obtain W powder as Present Invention Example 4.

W raw material powder having D50 of 81μm, Mo content of less than 0.01 mass%, and Na content of 1.0 mass ppm was prepared. Sieve classification using a mesh was performed on this W raw material powder to obtain W powder as Present Invention Example 5.

W raw material powder having D50 of 81μm, Mo content of less than 0.01 mass%, and Na content of 1.0 mass ppm was prepared. This W raw material powder was subjected to spheroidization treatment using a radio frequency induction thermal plasma device. The operating conditions were plasma power of 160kW, argon (flow rate = 280L/min) and hydrogen (flow rate = 45L/min) adjusted as working gas, and argon (flow rate = 8L/min) used as supply gas.

Next, classification treatment was performed on the W powder that had undergone spheroidization treatment using a precision air classifier (TC-25) manufactured by Nisshin Engineering Co., Ltd., with the rotor rotation speed set to 4000rpm to obtain W powder as Present Invention Example 6.

W raw material powder having D50 of 13μm, Mo content of 2.99 mass%, and Na content of 350.0 mass ppm was prepared. To this W raw material powder, silica powder having D50 of 1μm or less was added as a flow aid at 30 mass ppm and mixed to obtain W powder as Comparative Example 1.

W raw material powder having D50 of 13μm, Mo content of 3.01 mass%, and Na content of 19.0 mass ppm was prepared. This W powder was subjected to spheroidization treatment using a radio frequency induction thermal plasma device. The operating conditions were plasma power of 120kW, argon (flow rate = 260L/min) and hydrogen (flow rate = 30L/min) adjusted as working gas, and argon (flow rate = 8L/min) used as supply gas.

Next, classification treatment was performed on the W powder that had undergone spheroidization treatment using a precision air classifier (TC-25) manufactured by Nisshin Engineering Co., Ltd., with the rotor rotation speed set to 4000rpm. To the W powder that had undergone classification treatment, silica powder having D50 of 1μm or less was added as a flow aid at 7 mass ppm and mixed to obtain W powder as Comparative Example 2.

Table 1 shows the results of the following evaluations performed on each W powder obtained above.

(1) Content of Mo and Na

The content of Mo and Na was measured by atomic absorption spectroscopy. For Present Invention Examples 1 to 6, Mo content was also measured using glow discharge mass spectrometry.

(2) Particle size distribution

The particle size distribution was measured by laser diffraction scattering method in accordance with JIS Z 8825.

(3) Circularity

Circularity was determined by measuring 20,000 particles using a particle image analysis device (Morphologi G3) manufactured by Malvern Instruments.

(4) Flowability

Flowability was measured by a method in accordance with JIS Z 2502.

[Table 1]

|  | Mo content mass% <mass ppm> | Na content mass ppm | D50 $\mu$m | Circularity | Flowability s/50g |
|---|---|---|---|---|---|
| Present Invention Example 1 | < 0.01 (4.4 mass ppm) | 1.0 | 12 | 0.976 | 9.41 |
| Present Invention Example 2 | < 0.01 (6.9 mass ppm) | 1.0 | 56 | 0.980 | 5.16 |
| Present Invention Example 3 | < 0.01 (4.4 mass ppm) | 3.0 | 14 | 0.928 | 11.20 |
| Present Invention Example 4 | < 0.01 (4.7 mass ppm) | 2.0 | 15 | 0.947 | 11.07 |
| Present Invention Example 5 | < 0.01 (2.9 mass ppm) | 1.0 | 81 | 0.906 | 6.15 |
| Present Invention Example 6 | < 0.01 (3.7 mass ppm) | 1.0 | 81 | 0.968 | 6.09 |
| Comparative Example 1 | 2.99 | 350.0 | 13 | 0.861 | No flowability |
| Comparative Example 2 | 2.14 | 4.0 | 12 | 0.979 | 10.56 |

The W powder as Comparative Example 1 had a Na content as high as 350.0 mass ppm and did not flow in the flowability measurement.

In contrast, the W powders as Present Invention Examples 1 to 6 all had Mo content of 0.01 mass% or less (7.0 mass ppm or less), Na content within the range of 0.1 to 300.0 mass ppm (3.0 mass ppm or less), and flowability of 12.00 s/50g or less.

From these results, it was confirmed that the W powder according to the present invention is a powder having the flowability required in supplying powder to build locations.

Next, using the W powders obtained above as Present Invention Example 1 and Comparative Example 2, additive manufactured objects were produced under the Build conditions shown in Table 2 using a metal powder additive manufacturing system (EOS-M290) manufactured by EOS.

[Table 2]

|  | Laser output W | Scanning speed mm/s | Scanning pitch mm | Build thickness per scan $\mu$m |
|---|---|---|---|---|
| Build conditions 1 | 300 | 200 | 0.09 | 20 |
| Build conditions 2 | 300 | 300 | 0.09 | 20 |
| Build conditions 3 | 300 | 400 | 0.09 | 20 |
| Build conditions 4 | 350 | 300 | 0.09 | 20 |

For the additive manufactured objects obtained above, the area ratio of defects in a cross-section parallel to the build direction was measured using an optical microscope (VHX-6000) manufactured by Keyence Corporation. The results are shown in Table 3.

Also, as examples of optical microscope images in cross-sections parallel to the build direction of the additive manufactured objects, Present Invention Example 1 is shown in FIG. 1 and Comparative Example 2 is shown in FIG. 2. Here, the black parts in each figure are portions corresponding to defects.

[Table 3]

|  | Build conditions | Defect area ratio % |
|---|---|---|
| Present Invention Example 1 | Build conditions 1 | 0.56 |
|  | Build conditions 2 | 1.21 |
|  | Build conditions 3 | 1.05 |
|  | Build conditions 4 | 1.42 |
| Comparative Example 2 | Build conditions 1 | 2.40 |
|  | Build conditions 2 | 2.90 |
|  | Build conditions 3 | 3.54 |
|  | Build conditions 4 | 2.32 |

The additive manufactured objects produced using the W powder of Comparative Example 2 having a Mo content of 2.14 mass% had defect area ratios exceeding 2% under all build conditions, and multiple defective parts shown as black parts in FIG. 2 were confirmed.

In contrast, the additive manufactured objects produced using the W powder of Present Invention Example 1 having a Mo content of 4.4 mass ppm had defect area ratios of 2% or less under all build conditions. The defective parts shown as black parts in FIG. 1 were fewer compared to FIG. 2, and this result may be read as the difference in defect area ratios in Table 3.

From these results, the additive manufactured object of the present invention produced using the W powder of the present invention has fewer defects formed inside, and therefore can be expected to have sufficient strength in the finally obtained parts.

## Claims

1.  A W powder consisting of W and inevitable impurities, the impurities comprising Mo of 1 mass% or less and Na of 0.1 to 300.0 mass ppm, the W powder having a median diameter (D50) of 10 to 200 $\mu$m, and having a circularity of 0.800 or more.

2.  The W powder according to claim 1, having a flowability of 15.00 s/50g or less as measured in accordance with JIS Z 2502.

3.  An additive manufactured object consisting of W and inevitable impurities, having a defect area ratio of 2% or less in a cross-section parallel to a build direction.

FIG. 1

FIG. 2

## INTERNATIONAL SEARCH REPORT

| International application No. |
| --- |
| **PCT/JP2024/005133** |

**A. CLASSIFICATION OF SUBJECT MATTER**

**B22F 1/00**(2022.01)i; **B22F 1/05**(2022.01)i; **B22F 1/065**(2022.01)i; **B22F 10/28**(2021.01)i; **C22C 27/04**(2006.01)i
FI: B22F1/00 P; B22F10/28; C22C27/04 101; B22F1/05; B22F1/065

According to International Patent Classification (IPC) or to both national classification and IPC

**B. FIELDS SEARCHED**

Minimum documentation searched (classification system followed by classification symbols)

B22F1/00; B22F1/05; B22F1/065; B22F10/28; C22C27/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2004-225135 A (NETUREN CO., LTD.) 12 August 2004 (2004-08-12) paragraphs [0001], [0017]-[0054], fig. 1-6 | 1 |
| Y | | 2-3 |
| Y | JP 2022-46953 A (HITACHI METALS LTD.) 24 March 2022 (2022-03-24) paragraphs [0001], [0023], [0027]-[0033] | 2-3 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 March 2024** | **02 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/005133**

| Patent document cited in search report | | | Publication date (day/month/year) | Patent family member(s) | Publication date (day/month/year) |
|---|---|---|---|---|---|
| JP | 2004-225135 | A | 12 August 2004 | (Family: none) | |
| JP | 2022-46953 | A | 24 March 2022 | (Family: none) | |

Form PCT/ISA/210 (patent family annex) (July 2022)

**REFERENCES CITED IN THE DESCRIPTION**

**Patent documents cited in the description**

- JP 2022507758 A

- JP 2022046953 A